(19) Europäisches Patentamt
European Patent Office
Office européen des brevets

(11) **EP 4 332 143 A1**

(12) **EUROPÄISCHE PATENTANMELDUNG**

(43) Veröffentlichungstag:
**06.03.2024 Patentblatt 2024/10**

(21) Anmeldenummer: **22192538.1**

(22) Anmeldetag: **29.08.2022**

(51) Internationale Patentklassifikation (IPC):
**C08G 59/62** (2006.01)    **C08G 59/72** (2006.01)

(52) Gemeinsame Patentklassifikation (CPC):
**C08G 59/62; C08G 59/72**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder: **Behrens, Nicole**
**81245 München (DE)**

(74) Vertreter: **Hilti Aktiengesellschaft
Corporate Intellectual Property
Feldkircherstrasse 100
Postfach 333
9494 Schaan (LI)**

(54) **MEHRKOMPONENTEN-HARZSYSTEM AUF EPOXID-ALKOHOL-BASIS**

(57) Die vorliegende Erfindung betrifft ein Mehrkomponenten-Harzsystem umfassend (i) mindestens eine Harzkomponente (A) umfassend mindestens ein härtbares Epoxidharz und (ii) mindestens eine Härterkomponente (B) umfassend mindestens einen primären Alkohol und Kupfer(II)-tetrafluoroborat. Die vorliegende Erfindung betrifft ferner die Verwendung eines derartigen Mehrkomponenten-Harzsystems zur chemischen Befestigung von Konstruktionselementen in Löchern (beispielsweise Bohrlöchern) oder Spalten, sowie die Verwendung als Klebstoff oder als Beschichtung.

EP 4 332 143 A1

Processed by Luminess, 75001 PARIS (FR)

**Beschreibung**

Die vorliegende Erfindung betrifft ein Mehrkomponenten-Harzsystem umfassend (i) mindestens eine Harzkomponente (A) umfassend mindestens ein härtbares Epoxidharz und (ii) mindestens eine Härterkomponente (B) umfassend mindestens einen primären Alkohol und Kupfer(II)-tetrafluoroborat. Die vorliegende Erfindung betrifft ferner die Verwendung eines derartigen Mehrkomponenten-Harzsystems zur chemischen Befestigung von Konstruktionselementen in Löchern (beispielsweise Bohrlöchern) oder Spalten, sowie die Verwendung als Klebstoff oder als Beschichtung.

Im Bauwesen werden Harzsysteme zur chemischen Befestigung von Konstruktionselementen, wie beispielsweise Ankerstangen, Bewehrungseisen und Schrauben, in Bohrlöchern oder Spalten von Bauwerken eingesetzt. Derartige Harzsysteme werden auch als "chemische Dübel" bezeichnet. Gleichermaßen spielen Harzsysteme eine wichtige Rolle für die Verwendung als Klebstoff oder Beschichtung (z. B. für Bodenbeläge).

Diese Harzsysteme können als einheitliche Harzmasse vorliegen, oder als System aus mehreren Komponenten. Üblicherweise sind Harzsysteme kommerziell als ein Mehrkomponenten-Harzsystem erhältlich. Unter einem Mehrkomponenten-Harzsystem ist ein Harzsystem mit mehreren Komponenten, typischerweise zwei Komponenten (Zwei-Komponenten-System), mit (i) mindestens einer Harzkomponente (A) und (ii) mindestens einer Härterkomponente (B), sowie gegebenenfalls weiteren separaten Komponenten zu verstehen. Die Komponenten sind in separaten Behältern, so dass sie während der Lagerung und vor der Anwendung nicht miteinander in Berührung kommen und nicht miteinander reagieren können. Zur bestimmungsgemäßen Verwendung eines Mehrkomponenten-Harzsystems werden die Komponenten (A) und (B) und gegebenenfalls weitere Komponenten am gewünschten Einsatzort vermischt, so dass dort die Härtungsreaktion stattfinden kann.

Zur Aufbewahrung vor der Nutzung eignen sich Patronen, beispielsweise aus Kunststoff, Keramik oder Glas, in denen die Komponenten durch zerstörbare Abgrenzungswandungen oder integrierte separate zerstörbare Behältnisse voneinander getrennt angeordnet sind; beispielsweise als ineinander verschachtelte Patronen, bevorzugt Zweikammerpatronen, sowie insbesondere Mehr- oder bevorzugt Zweikomponentenkartuschen, in deren Kammern die Komponenten (A) und (B) eines Mehrkomponenten-Harzsystems enthalten sind. Durch Zerstörung der Abgrenzungen in den Patronen bzw. Ausdrücken der Kartuschen durch beispielsweise einen Statikmischer werden die beiden oder mehreren Komponenten vermischt. Dadurch wird eine Härtungsreaktion, d.h. eine Polymerisation, in Gang gebracht und das Harz gehärtet.

In einem Mehrkomponenten-Harzsystem können andere, übliche Bestandteile, wie beispielsweise Füllstoffe, Additive, Beschleuniger, Inhibitoren, Lösungsmittel und Reaktivverdünner, in einer oder beiden Komponenten (A) und/oder (B), sowie optional weiteren Komponenten enthalten sein. Mehrkomponenten-Harzsysteme können gegebenenfalls auch Füllstoffe enthalten, welche selbst durch hydraulisches Abbinden zur Verfestigung beitragen können, wie im Falle von Zement.

Ein weit verbreitetes Mehrkomponenten-Harzsystem ist ein Epoxidharzsystem auf Epoxid-Amin-Basis (wie z. B. in der EP2826796 A1 und EP 3 626 756 A1 beschrieben). In einem derartigen Epoxidharzsystem enthält die Harzkomponente (A) mindestens ein härtbares Epoxidharz, und die Härterkomponente (B) mindestens ein Amin, welches das härtbare Epoxidharz aushärten kann.

Die in derartigen Epoxidharzsystemen auf Epoxid-Amin-Basis enthaltenen Amine sind häufig als "ätzend" gekennzeichnet (GHS05), wodurch sich für den Anwender Probleme im Umgang und eventuell die Notwendigkeit von Schutzausrüstung ergeben und wodurch eine Verwendung auf empfindlichen Untergründen, welche durch die ätzende Wirkung der Amine angegriffen werden, schwierig wird. Auch stammen die enthaltenen Amine üblicherweise aus nicht-nachwachsenden, d.h. fossilen Quellen. Hingegen haben handelsübliche Epoxidharze heute bereits einen hohen Anteil an nachwachsenden Rohstoffen, da sie beispielsweise aus Epichlorhydrin hergestellt werden können, welches wiederum aus Glycerin erhalten wird. Glycerin fällt in großem Maßstab als Nebenprodukt der Biodiesel-Produktion an. Das Epoxidharz kann zu einem Teil (über die Synthese mit Epichlorhydrin) oder insgesamt aus nachhaltigen Quellen stammen. Beispiele für Epoxidharze aus nachhaltigen Quellen sind Isosorbid-diglycidylether (CAS 13374-44-2), Limonen-1,2:8,9-dioxid (LDO, CAS 96-08-2), Vanillin-diglycidylether (DGEVA, CAS 1584677-14-4), Phloroglucinol-triglycidylether (PTHE, CAS 4223-14-7), Vanillinsäure-bisepoxid (CAS 1393710-63-8), und epoxidiertes Pflanzenöl, wie z. B. epoxidiertes Rizinusöl (CAS 105839-17-6) und epoxidiertes Cardanolöl (Mischung enthaltend u.a. CAS 1260636-34-7 und CAS 63284-28-6). Beispiele für kommerziell erhältliche bio-basierte Polyepoxide, die für Epoxy-Amin-Systeme eingesetzt werden können, sind Erisys GE 35-H (epoxidiertes Rizinusöl, Huntsman, Belgien), Erisys GE 60 und GE 61 (multifunktionelles Epoxid auf Basis von Sorbitol, Huntsman, Belgien) sowie Araldite DY-S (multifunktionelles Epoxid auf Basis von Polyglycerin, Huntsman, Belgien).

Eine Aufgabe der vorliegenden Erfindung ist daher ein umweltfreundlicheres Epoxidharz-System bereitzustellen, in dessen Härterkomponente (B) das Amin durch eine andere Verbindung ersetzt wird. Vorzugsweise wird das Amin dabei zumindest teilweise durch eine Verbindung ersetzt, die aus nachwachsenden Rohstoffen gewonnen werden kann. Eine weitere Aufgabe ist die Bereitstellung eines Epoxidharz-Systems für die Verwendung auf empfindlichen Untergründen, welche durch die ätzende Wirkung der Amine angegriffen werden. Die Aushärtung des Systems sollte bei typischen Umgebungs- und Untergrundtemperaturen von und in Bauwerken möglich sein, insbesondere bei Raumtemperatur (25°C), da viele der Anwendungen im Baubereich stattfinden, wo es nicht möglich ist Wärme einzubringen.

Die der Erfindung zugrundeliegenden Aufgaben werden durch Bereitstellung eines Mehrkomponenten-Harzsystems gemäß Anspruch 1 gelöst. Bevorzugte Ausführungsformen eines erfindungsgemäßen Mehrkomponenten-Harzsystems sind in den Unteransprüchen angegeben, welche miteinander kombiniert werden können, soweit nicht anders angegeben.

Gegenstand der Erfindung ist ein Mehrkomponenten-Harzsystem umfassend mindestens eine Harzkomponente (A) umfassend mindestens ein härtbares Epoxidharz; und mindestens eine Härterkomponente (B) umfassend einen Härter für das in der Harzkomponente (A) enthaltene Epoxidharz, wobei es sich bei dem Härter um mindestens einen primären Alkohol mit einer mittleren OH-Funktionalität von etwa 2 oder größer handelt; ferner umfassend Kupfer(II)-tetrafluoroborat. Das Kupfer(II)-tetrafluoroborat ist typischerweise Kupfer(II)-tetrafluoroborat in wasserfreier Form oder Kupfer(II)-tetrafluoroborat Hydrat.

Gegenstand der Erfindung ist auch die Verwendung einer Epoxidharzmasse hergestellt aus einem erfindungsgemäßen Mehrkomponenten-Harzsystem als Klebstoff, als Beschichtung, oder als chemischer Dübel. Gegenstand ist insbesondere die Verwendung als chemischer Dübel zur chemischen Befestigung von Konstruktionselementen, insbesondere in (Bohr)löchern oder Spalten, sowie als Klebstoff oder Beschichtung. Die Verwendung erfolgt typischerweise auf bzw. in einem in Bauwerken vorkommenden Untergrund wie Stahl, Holz, Gestein oder Ziegel. Dieser Untergrund ist bevorzugt nicht-basisch, also bevorzugt beispielsweise kein Beton.

Die vorliegende Erfindung ersetzt das in handelsüblichen Epoxidharz-Mehrkomponentensystemen als Härter eingesetzte Amin durch einen primären Alkohol mit einer mittleren OH-Funktionalität von etwa 2 oder größer. Es hat sich überraschenderweise herausgestellt, dass das resultierende Epoxidharz-Alkohol-Mehrkomponentensystem bei 25°C innerhalb einer annehmbaren Zeit zu einem für die jeweiligen Verwendungen geeigneten Polymer aushärtet, wenn Kupfer(II)tetrafluoroborat als Beschleuniger eingesetzt wird.

Es ist daher erfindungswesentlich, dass ein erfindungsgemäßes Mehrkomponenten-Harzsystem Kupfer(II)-tetrafluoroborat umfasst; bevorzugt, dass ein erfindungsgemäßes Mehrkomponenten-Harzsystem Kupfer(II)-tetrafluoroborat nur in der Komponente (B) umfasst. Denn Kupfer(II)-tetrafluoroborat in der Komponente (A) könnte zu einer zumindest teilweisen Homopolymerisation des mindestens einen härtbaren Epoxidharzes in der Komponente (A) führen.

Kupfer(II)-tetrafluoroborat ist mit einem Stoffmengenanteil von etwa 0,1 bis etwa 20 mol-% bezogen auf die Stoffmenge des mindestens einen primären Alkohols in der Komponente (B) enthalten, bevorzugt mit einem Stoffmengenanteil von etwa 1 bis etwa 17 mol-% bezogen auf die Stoffmenge des mindestens einen primären Alkohols in der Komponente (B), stärker bevorzugt mit einem Stoffmengenanteil von etwa 2 bis etwa 15 mol-%, noch stärker bevorzugt mit einem Stoffmengenanteil von etwa 2 bis etwa 12 mol-% bezogen auf die Stoffmenge des mindestens einen primären Alkohols in der Komponente (B).

Im Sinne der Erfindung haben die hier und in der nachfolgenden Beschreibung verwendeten Begriffe die folgende Bedeutung:

- *"Mehrkomponenten-Harzsystem"* bezeichnet ein Harzsystem, das mehrere voneinander getrennt gelagerte Komponenten umfasst, wobei das Harzsystem mindestens eine Harzkomponente (A) und mindestens eine Härterkomponente (B) umfasst, so dass eine Härtung erst nach dem Mischen aller Komponenten erfolgt. In einer bevorzugten Ausführungsform ist ein Mehrkomponenten-Harzsystem ein Zwei-Komponenten-Harzsystem.

- *"Epoxidharzmasse"* bezeichnet eine reaktionsfähige Masse umfassend ein härtbares Epoxidharz und einen geeigneten Härter für das härtbare Epoxidharz. Erfindungsgemäß wird diese typischerweise durch Mischen der Harzkomponente (A) und der Härterkomponente (B) erhalten und anschließend zur chemischen Befestigung, als Klebstoff oder als Beschichtung verwendet.

- *"härtbares Epoxidharz"* bezeichnet ein Harz, welches reaktive Epoxidgruppen enthält, die mit einem geeigneten Härter zu einem gehärteten Harz in einer Polymerisationsreaktion umgesetzt werden können, wobei ein Epoxid ein zyklischer Ether mit einem dreiatomigen Ring ist. Ein anderer Begriff für Epoxidgruppe ist Glycidylgruppe.

- *"mittlere Epoxid-Funktionalität"* beschreibt die gemittelte Anzahl an reaktiven EpoxidGruppen eines oder einer Mischung aus mehreren härtbaren Epoxidharzen pro Molekül.

- *"Alkohol"* bezeichnet eine organische Verbindung, die mindestens eine Hydroxylgruppe (R-OH; hier auch als OH-Gruppe bezeichnet) aufweist. Es wird zwischen primären (R-CH$_2$-OH), sekundären (R$^1$-CR$^2$H-OH) und tertiären (R$^1$-CR$^2$R$^3$-OH) Alkoholen bzw. OH-Gruppen; aromatischen Alkoholen bzw. OH-Gruppen (die Hydroxylgruppe ist direkt mit einem Aromaten verknüpft), sowie ein- und mehrwertigen Alkoholen (mit einer oder mehreren Hydroxylgruppen), unterschieden. Ein primärer Alkohol kann eine oder mehrere primäre OH-Gruppen enthalten, und er kann neben der einen oder den mehreren primären OH-Gruppen auch noch weitere, nicht-primäre (also beispielsweise sekundäre) OH-Gruppen enthalten.

- *"mittlere OH-Funktionalität"* beschreibt die gemittelte Anzahl an OH-Gruppen (Hydroxylgruppen) in einem Alkohol oder einer Mischung von Alkoholen, die mit einer Epoxidgruppe reagieren können. Im Kontext der vorliegenden Erfindung bezieht sich die mittlere OH-Funktionalität lediglich auf primäre OH-Gruppen, da dies die Gruppen sind, die in der Anwesenheit von Kuper(II)-tetrafluoroborat mit einer Epoxidgruppe reagieren können. *"Mittlere OH-Funktionalität"* beschreibt also im Kontext der vorliegenden Erfindung die gemittelte Anzahl an primären OH-Gruppen (Hydroxylgruppen) in einem Alkohol oder einer Mischung von Alkoholen. Sie wird für eine Mischung nach der Formel: mittlere OH-Funktionalität (Mischung) = $\Sigma$ OH-Funktionalität (Alkohol i) / ni, also der Summe der OH-Funktionalität (Zahl der primären OH-Gruppen pro Molekül) der Einzelalkohole i geteilt durch die Anzahl der Einzelalkohole i, ermittelt. Liegt nur ein Alkohol oder ein Gemisch von Alkoholen mit gleicher OH-Funktionalität vor, so entspricht die *"mittlere OH-Funktionalität"* der OH-Funktionalität des Alkohols.

- *"Hydrat"* bezeichnet eine chemische Verbindung, an die ein oder mehrere Wassermoleküle gebunden sind. Bei kristallinen Festkörpern, wie etwa Salzen, wird das gebundene Hydratwasser auch Kristallwasser genannt. Die Anzahl an gebunden Wassermolekülen kann variieren. Typisch ist eine Anzahl von Wassermolekülen in Salzen im Bereich von 1 bis 12. Kupfer(II)-tetrafluoroborat kristallisiert mit einer unbekannten Zahl an Kristallwassermolekülen, das derzeit einzige kommerziell erhältliche Kupfer(II)-tetrafluoroborat mit einer definierten Zahl von Kristallwassermolekülen ist Kupfer(II)-tetrafluoroborat-Hexahydrat.

- *"nicht-basischer Untergrund"* bezeichnet einen Untergrund, insbesondere ein Baumaterial, der bei Kontakt mit Wasser eine wässrige Lösung erzeugt, welche nicht-basisch, also neutral oder sauer reagiert. Eine nicht-basische Reaktion wird durch ein ausgeglichenes Verhältnis von Hydronium-Kationen und Hydroxid-Anionen, oder das Vorhandensein von einem Überschuss an Hydronium-Kationen in Lösung verursacht, wobei ein pH-Wert $\leq 7$ gemessen wird. Als Gegenbeispiel: Ein basischer Untergrund ist beispielsweise Beton. Beton ist daher bevorzugt kein Untergrund bei der Verwendung des erfindungsgemäßen Mehrkomponenten-Harzsystems.

- *"Untergrundtemperatur"* bezeichnet die Temperatur des Untergrundes an der Kontaktfläche zur auszuhärtenden Epoxidharzmasse. Die Untergrundtemperatur ist abhängig von der Umgebungstemperatur, im Bauwesen typischerweise die Außentemperatur, sowie möglicher Erwärmung durch Sonneneinstrahlung und externer Wärmezufuhr durch Wärmequellen wie etwa einem Heizblock oder einem Heizlüfter. Die Untergrundtemperatur kann mit Hilfe eines Infrarot-Thermometers bestimmt werden.

- *"aliphatische Verbindungen"* sind acyclische oder cyclische, gesättigte oder ungesättigte Kohlenstoffverbindungen, ausgenommen aromatische Verbindungen.

- *"cycloaliphatische Verbindungen"* sind aliphatische Verbindungen umfassend oder bestehend aus einer carbocyclischen Ringstruktur, ausgenommen Benzolderivate oder andere aromatische Systeme.

- *"aromatische Verbindungen"* sind Verbindungen, die der Hückel (4n+2)-Regel folgen.

- *"araliphatische Verbindungen"* sind Verbindungen mit einer aliphatischen und einer aromatischen Teilstruktur; im Falle einer funktionalisierten araliphatischen Verbindung ist eine funktionelle Gruppe (beispielsweise eine primäre OH-Gruppe) an den aliphatischen und nicht den aromatischen Teil der Verbindung gebunden.

- *"heteroaromatische Verbindungen"* sind Verbindungen, die ferner ein Heteroatom im aromatischen System enthalten.

- *"poly", "Poly"* als Präfix bedeutet, dass zwei oder mehr der sich an dieses Präfix anschließenden Gruppen in einer Verbindung enthalten sind.

- *"ein", "eine", "einer"* als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.

- *"mindestens ein", "mindestens eine", "mindestens einer"* zahlenmäßig *"ein oder mehrere"*; in einer bevorzugten Ausführungsform ist mit diesem Begriff zahlenmäßig *"ein", "eine", "einer"* gemeint.

- *"etwa"* vor einem Zahlenwert erlaubt eine Abweichung von $\pm10$ %, in einer bevorzugten Ausführungsform $\pm5$ %, in einer stark bevorzugten Ausführungsform $\pm1$ % von diesem Zahlenwert, in der am stärksten bevorzugten Ausführungsform bedeutet *"etwa"* genau diesen Zahlenwert, also eine Abweichung von $\pm0$ %.

- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag dieser Anmeldung aktuellen Ausgabe verwendet. Alle Handelsnamen entsprechenden den Produkten, wie sie unter diesen Handelsnamen zum Zeitpunkt des Anmeldetages der vorliegenden Anmeldung verfügbar waren.

Wie vorstehend ausgeführt ist ein Mehrkomponenten-Harzsystem gemäß der vorliegenden Erfindung ein System, das zwei oder mehrere räumlich voneinander getrennt gelagerte Komponenten umfasst. In einer bevorzugten Ausführungsform handelt es sich bei einem erfindungsgemäßen Mehrkomponenten-Harzsystem um ein Zwei-Komponenten-Harzsystem. Im Folgenden werden die Bestandteile der Komponenten (A) und (B) eines erfindungsgemäßen Mehrkomponenten-Harzsystems beispielhaft anhand eines Zwei-Komponenten-Systems näher erläutert.

Erfindungsgemäße Epoxid-Alkohol-Systeme sind Mehrkomponenten-Systeme, bei denen je eine Epoxy-Gruppe des in Komponente (A) enthaltenen härtbaren Epoxidharzes rechnerisch mit je einer primären Alkoholgruppe des in Komponente (B) enthaltenen Alkohols reagiert. Das Mischverhältnis eines Epoxids und eines Alkohols errechnet sich aus dem Epoxyäquivalentgewicht (EEW; epoxy equivalent weight) und dem Molekulargewicht des Alkohols geteilt entweder durch die Anzahl primärer Alkoholgruppen pro Alkoholmolekül (rechnerischer AHEW) oder durch den zuvor experimentell ermittelten experimentellen AHEW. In der Regel wird allerdings mit Mischungen gearbeitet, die z. B. mehrere Epoxide und/oder Alkohole und weitere Stoffe, wie z. B. Füllstoffe, enthalten. In diesem Fall errechnet sich z. B. das EEW der Mischung folgendermaßen:

$$EEW_{Mischung} = \frac{Gewicht_{Mischung} \, in \, g}{\left( \dfrac{Gewicht_{Rohstoff1} \, in \, g}{EEW_{Rohstoff1} \, in \, \frac{g}{EQ}} + \dfrac{Gewicht_{Rohstoff2} \, in \, g}{EEW_{Rohstoff2} \, in \, \frac{g}{EQ}} + \cdots \right)}$$

Die Berechnung des AHEWs einer Mischung erfolgt entsprechend über die einzelnen AHEWs der einzelnen Alkohole, das Gewicht der Alkohole und das Gesamtgewicht der Komponente (B).

Das EEW ist bei kommerziell erhältlichen Epoxidharzen in der Regel von den Herstellern angegeben oder wird nach bekannten Methoden (wie der oben gezeigten Methode) ermittelt bzw. berechnet. Der EEW-Wert gibt die Menge in g Harz an, die 1 Mol Epoxidgruppen enthält und hat die Einheit g/EQ (also g pro Moläquivalent).

Der AHEW kann auch experimentell ermittelt werden. Die experimentelle Ermittlung des AHEW wird weiter unten beschrieben.

Härtbares Epoxidharz

Die Harzkomponente (A) eines Mehrkomponenten-Harzsystems gemäß der Erfindung umfasst mindestens ein härtbares Epoxidharz.

Als das mindestens eine härtbare Epoxidharz in Komponente (A) der vorliegenden Erfindung kommt eine Vielzahl der hierfür dem Fachmann bekannten und kommerziell erhältlichen Verbindungen, einzeln oder in beliebigen Mischungen untereinander, in Betracht.

Ein erfindungsgemäß verwendbares Epoxidharz kann sowohl gesättigt als auch ungesättigt sowie aliphatisch, cycloaliphatisch, aromatisch oder heterocyclisch (z. B. Isosorbid diglycidylether) sein und auch Hydroxylgruppen aufweisen. Es kann weiterhin solche Substituenten enthalten, die unter den erfindungsgemäßen Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet. Epoxidharze liegen bevorzugt flüssig vor und haben in der Regel ein durchschnittliches Molekulargewicht von MW $\leq$ 2000 g/mol.

Das härtbare Epoxidharz hat bevorzugt eine mittlere Epoxid-Funktionalität von etwa 1,5 oder größer, bevorzugter von etwa 2 oder größer, stärker bevorzugt von etwa 2 bis etwa 10, noch stärker bevorzugt von etwa 2 bis etwa 3, am bevorzugtesten von etwa 2.

Ein in der vorliegenden Erfindung verwendetes härtbares Epoxidharz kann ein Epoxyäquivalentgewicht (EEW, epoxy equivalent weight) von etwa 120 bis etwa 2000 g/EQ aufweisen, vorzugsweise von etwa 140 bis etwa 400 g/EQ, insbesondere von etwa 155 bis etwa 300 g/EQ, ganz besonders von 158 bis 290 g/EQ aufweisen. Insbesondere bevorzugt sind härtbare Epoxidharze mit den in den Ausführungsbeispielen angegebenen EEW.

Vorzugsweise handelt es sich bei dem mindestens einen härtbaren Epoxidharz um ein Glycidylether, der sich von einem mehrwertigen Alkohol, insbesondere von einem mehrwertigen Phenol, wie beispielsweise Bisphenol und Novolak, ableitet. Beispiele für derartige geeignete Epoxidharze sind Verbindungen ausgewählt aus der Gruppe der Diglycidylether auf Basis von Resorcin, Hydrochinon, 2,2-Bis-(4-Hydroxyphenyl)-propan (Bisphenol A), Isomerengemischen des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan. Insbesondere bevorzugt sind härtbare Epoxidharze ausgewählt aus der Gruppe der Diglycidylether auf Basis von Bisphenol A und Bisphenol F und Mischungen davon, beispielsweise die in den Ausführungsbeispielen verwendeten Epoxidharze.

Ein bevorzugtes Beispiel für ein kommerziell erhältliches Bisphenol F-basiertes Epoxidharz, enthaltend Bisphenol-F-diglycidylether, ist Araldite GY 282. Ein Beispiel für ein kommerziell erhältliches Bisphenol A-basiertes Epoxidharz, enthaltend Bisphenol-A-diglycidylether, ist Araldite GY 240.

In einer weiteren bevorzugten Ausführungsform ist das mindestens eine härtbare Epoxidharz ein Epoxidharz, das aus nachwachsenden Quellen hergestellt wurde. Derartige Epoxidharze aus nachwachsenden Quellen sind beispielsweise Isosorbid-diglycidylether (CAS 13374-44-2), Limonen-1,2:8,9-dioxid (LDO, CAS 96-08-2), Vanillin-diglycidylether (DGEVA, CAS 1584677-14-4), Phloroglycinol-triglycidylether (PTHE, CAS 4223-14-7), Vanillinsäure-bisepoxid (CAS 1393710-63-8), und epoxidiertes Pflanzenöl, wie z. B. epoxidiertes Rizinusöl (CAS 105839-17-6, kommerziell erhältlich als Erisys GE 35-H von Huntsman, Belgien) und epoxidiertes Cardanolöl (Mischung enthaltend u.a. CAS 1260636-34-7 und CAS 63284-28-6). Neben Erisys GE 35-H sind Beispiele für kommerziell in größeren Mengen erhältliche bio-basierte Polyepoxide, die im Rahmen der Erfindung eingesetzt werden können, auch Erisys GE 60 und GE 61 (Epoxidharz auf Basis von Sorbitol, Huntsman, Belgien) sowie Araldite DY-S (Epoxidharz auf Basis von Polyglycerin, Huntsman, Belgien).

Der Anteil des mindestens einen härtbaren Epoxidharzes an der Harzkomponente (A) beträgt >0 bis 100 Gew.-%, bevorzugt von etwa 10 bis etwa 70 Gew.-%, bevorzugter von etwa 30 bis etwa 60 Gew.-%, und besonders bevorzugt von etwa 40 bis etwa 60 Gew.-%, bezogen auf das Gesamtgewicht der Harzkomponente (A).

Primärer Alkohol mit einer mittleren OH-Funktionalität von etwa 2 oder größer

Die Härterkomponente (B) eines Mehrkomponenten-Harzsystems gemäß der Erfindung umfasst mindestens einen primären Alkohol mit einer mittleren OH-Funktionalität von etwa 2 oder größer und Kupfer(II)-tetrafluoroborat in wasserfreier Form oder als Hydrat.

Als Härter in der Komponente (B) der vorliegenden Erfindung kommt eine Vielzahl von primären Alkoholen mit einer mittleren OH-Funktionalität von etwa 2 oder größer, einzeln oder in beliebigen Mischungen untereinander, in Betracht. Bevorzugt ist eine mittlere OH-Funktionalität von etwa 2 bis etwa 4, bevorzugter eine mittlere OH-Funktionalität von etwa 2 bis etwa 3.

Ein erfindungsgemäß als Härter eingesetzter primärer Alkohol umfasst mindestens eine primäre OH-Gruppe, bevorzugt umfasst er jedoch mindestens zwei primäre OH-Gruppen. Ferner kann der Alkohol sowohl gesättigt als auch ungesättigt sowie aliphatisch, cycloaliphatisch, araliphatisch, oder heteroaraliphatisch sein und kann weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Ferner können die primären Alkohole weitere sekundäre oder tertiäre OH-Gruppen enthalten.

Bevorzugt ist der erfindungsgemäß als Härter eingesetzte primäre Alkohol ein aliphatischer, cycloaliphatischer oder araliphatischer Alkohol.

Bevorzugt umfasst ein aliphatischer Alkohol 2 bis 30, bevorzugter 2 bis 20, noch bevorzugter 2 bis 10, besonders bevorzugt 2 bis 6 C-Atome. Die Kohlenstoffkette des aliphatischen Alkohols kann verzweigt oder unverzweigt sein, bevorzugt ist sie unverzweigt.

Bevorzugt umfasst ein cycloaliphatischer Alkohol 6 bis 30, bevorzugter 7 bis 20, noch bevorzugter 7 bis 15, besonders bevorzugt 8 bis 12 C-Atome. Der cycloaliphatische Alkohol umfasst mindestens eine aliphatische Seitenkette, an der sich eine primäre OH-Gruppe befindet, bevorzugt mindestens zwei aliphatische Seitenketten, an denen sich eine primäre OH-Gruppe befindet. Die aliphatische Seitenkette umfasst bevorzugt 1 bis 10, bevorzugter 1 bis 8, noch bevorzugter 1 bis 6 C-Atome. Die aliphatischen Seitenketten können verzweigt oder unverzweigt sein, besonders bevorzugt sind diese unverzweigt.

Bevorzugt umfasst ein araliphatischer Alkohol 6 bis 30, bevorzugter 6 bis 20, noch bevorzugter 7 bis 15, besonders bevorzugt 8 bis 12 C-Atome. Ein araliphatischer Alkohol umfasst mindestens eine aliphatische Seitenkette, wobei die aliphatische Seitenkette 1 bis 10, bevorzugter 1 bis 8, noch bevorzugter 1 bis 6 C-Atome und besonders bevorzugt 1 bis 2 C-Atome umfasst. Die aliphatischen Seitenketten können verzweigt oder unverzweigt sein, besonders bevorzugt sind diese unverzweigt. Besonders geeignete araliphatische Alkohole umfassen mindestens zwei aliphatischen Seitenketten, welche an dem aromatischen Grundgerüst des araliphatischen Alkohols an unterschiedlichen Stellen positioniert sind und jeweils eine primäre OH-Gruppe umfassen.

Beispiele für besonders geeignete Alkohole sind Glycerin (1,2,3-Propantriol, CAS-Nr. 56-81-5), 1,3-Benzoldimethanol (CAS-Nr. 626-18-6), 1,3-Cyclohexandiol (CAS-Nr. 504-01-8), 2,6-Bis(hydroxymethyl)-p-kresol (CAS-Nr. 91-04-3), 4,8-Bis(hydroxymethyl)tricyclo[5.2.1.02,6]decan (CAS-Nr. 26896-48-0), 1,3-Propandiol (1,3-PDO, CAS 504-63-2), 1,5-Pentandiol (1,5-PDO, CAS 111-29-5), 1,4-Butandiol (1,4-BDO, 110-63-4), Dipentaerythrit, Pentaerythritol, Erythritol, Polyether-Polyole (z. B. Polytrimethylenglykol, Polytetramethylenglykol), Polyester-Polyole, Xylitol, Lactitol, Isomalt, Sorbitol, Mannitol, Ethylenglykol (1,2-Ethandiol), Lignin-Polyole, Cellulose, Fructose, Polyole, die aus ungesättigten Fettsäuren durch Ozonolyse und Hydrierung gewonnen wurden, und Mischungen davon.

Bevorzugte geeignete Alkohole sind Alkohole aus nachwachsenden Quellen, wie z. B. Glycerin, 1,3-PDO, 1,5-PDO und 1,4-BDO und Zuckeralkohole wie z.B. Xylitol, Lactitol, Isomalt, Sorbitol, Mannitol Lignin-Polyole, Cellulose, Fructose. Besonders geeignet sind aus dieser Gruppe Glycerin, 1,3-PDO, 1,5-PDO und 1,4-BDO.

Ein besonders stark bevorzugtes Beispiel für einen geeigneten Alkohol ist Glycerin, allein oder in Mischung mit einem anderen Alkohol, insbesondere in Mischung mit einem oder mehreren der Alkohole, die in den Ausführungsbeispielen in Mischungen mit Glycerin eingesetzt werden.

Der Anteil des mindestens einen primären Alkohols an der Härterkomponente (B) beträgt etwa 20 bis etwa 90 Gew.-%, bevorzugt etwa 30 bis etwa 80 Gew.-%, bevorzugter etwa 40 bis etwa 80 Gew.-%, und besonders bevorzugt etwa 50 bis etwa 70 Gew.-%, bezogen auf das Gesamtgewicht der Härterkomponente (B).

Kupfer(I I)-tetrafluoroborat

Das Kupfer(II)-tetrafluoroborat ist erfindungsgemäß erforderlich, um eine Aushärtung in akzeptabler Zeit des härtbaren Epoxidharzes mit dem primären Alkohol zu bewirken. Es wirkt also als Beschleuniger. Es wird Kupfer(II)-tetrafluoroborat Hydrat (CAS-Nr. 207121-39-9) mit der Summenformel $Cu(BF_4)_2 \times H_2O$ verwendet. Kupfer(II)-tetrafluoroborat Hydrat kristallisiert mit einer unbestimmten Zahl an Kristallwasser-Molekülen. Bevorzugt liegt eine Anzahl von 1 bis 12 Wassermolekülen als Hydratwasser vor, stärker bevorzugt 4 bis 8 Wassermoleküle. In manchen Ausführungsformen liegen Mischungen der Hydrate vor. In einer Ausführungsform liegt Kupfer(II) tetrafluoroborat-Hexahydrat (CAS-Nr. 72259-10-0) mit 6 Wassermolekülen als Hydratwasser vor. In einer Ausführungsform wird wasserfreies Kupfer(II) tetrafluoroborat (CAS-Nr. 38465-60-0) verwendet.

Üblicherweise beträgt der Stoffmengenanteil von Kupfer(II)-tetrafluoroborat in der Komponente (B) von etwa 1 bis etwa 20 mol-% bezogen auf die Stoffmenge des mindestens einen primären Alkohols (also die Gesamtmenge aller Alkohole mit mindestens einer primären OH-Gruppe in mol) in der Komponente (B). Bevorzugt beträgt der Stoffmengenanteil etwa 2 bis etwa 15 mol-% bezogen auf die Stoffmenge des mindestens einen primären Alkohols in der Komponente (B). Noch stärker bevorzugt beträgt der Stoffmengenanteil von etwa 2 bis etwa 12 mol-% bezogen auf die Stoffmenge des mindestens einen primären Alkohols in der Komponente (B).

Die Berechnung der Stoffmengenanteile erfolgt wie für den Fachmann bekannt, über die Molmasse des mindestens einen eingesetzten primären Alkohols sowie die Molmasse des eingesetzten Kupfer(II)-tetrafluoroborats.

Der Anteil des erfindungsgemäß verwendeten Kupfer(II)-tetrafluoroborats hängt von der für die Verwendung nötigen Aushärtezeit, der Aushärtetemperatur, sowie von dem mindestens einen eingesetzten primären Alkohol und dem eingesetzten härtbaren Epoxidharz ab und kann entsprechend der jeweiligen Verwendung variiert werden. So lässt sich der Anteil des erfindungsgemäß verwendeten Kupfer(II)-tetrafluoroborats beispielsweise verringern, wenn die Aushärtetemperatur erhöht wird.

Weitere Bestandteile der Komponenten (A) und (B)

Sowohl die Harzkomponente (A) als auch die Härterkomponente (B) als auch beide Komponenten (A) und (B) umfassen typischerweise neben dem härtbaren Epoxidharz bzw. dem primären Alkohol und dem Kupfer(II)-tetrafluoroborat mindestens einen weiteren Bestandteil. Weitere übliche Bestandteile sind insbesondere Reaktivverdünner, Füllstoffe, Haftvermittler, Rheologieadditive und Verdicker (Thixotropiermittel).

Je nach weiterem Bestandteil kann es bevorzugt sein, dass der mindestens eine weitere Bestandteil nur in der Harzkomponente (A), nur in der Härterkomponente (B), oder in beiden Komponenten enthalten ist.

Reaktivverdünner

In einer Ausführungsform kann die Harzkomponente (A) und/oder die Härterkomponente (B), bevorzugt zumindest die Harzkomponente (A), mindestens einen Reaktivverdünner enthalten. Als Reaktivverdünner werden Glycidylether von aliphatischen, cycloaliphatischen oder aromatischen Mono- oder insbesondere Polyalkoholen verwendet, die eine geringere Molekularmasse und Viskosität als die weiter oben beschriebenen härtbaren Epoxidharze aufweisen.

Beispiele für geeignete Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether (HDDGE), sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei BDDGE, HDDGE, Trimethylolpropantriglycidylether und Trimethylolethantriglycidylether bevorzugt sind. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Besonders bevorzugt sind die in den Beispielen verwendeten Reaktivverdünner und deren dort verwendete Mischungen.

Der mindestens eine Reaktivverdünner liegt, wenn er vorhanden ist, bevorzugt in einem Anteil von >0 bis etwa 30 Gew.-% bezogen auf das Gesamtgewicht der Komponente, in der der Reaktivverdünner enthalten ist (beispielsweise der Harzkomponente (A)) vor, insbesondere in einem Anteil von etwa 10 bis etwa 25 Gew.-% bezogen auf das Gesamtgewicht der Komponente.

Füllstoffe

Sowohl die Harzkomponente (A) als auch die Härterkomponente (B) kann mindestens einen Füllstoff enthalten. Es ist bevorzugt, dass sowohl die Harzkomponente (A) als auch die Härterkomponente (B) jeweils mindestens einen Füllstoff enthalten.

Als Füllstoffe dienen bevorzugt anorganische Füllstoffe, insbesondere Quarz, Aluminiumoxide, Glas, Korund, Porzellan, Steingut, Schwerspat, Leichtspat, Gips, Talkum, und/oder Kreide sowie deren Mischungen. Bevorzugt ist der mindestens eine Füllstoff ein nicht-basischer Füllstoff. Insbesondere ist der mindestens eine Füllstoff kein Zement. Auf basische Füllstoffe wie Zemente (z. B: Portlandzement oder Aluminatzement) wird erfindungsgemäß typischerweise verzichtet, da diese das Aushärten der Epoxidharzmasse nach dem Mischen der Komponenten (A) und (B) eines erfindungsgemäßen Mehrkomponenten-Harzsystems verlangsamen oder verhindern können.

Die Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilan-modifiziert) und Silbond AST 25 (aminosilan-behandelt) besonders bevorzugt. Ferner können Aluminiumoxid-basierte Füllstoffe wie beispielsweise Aluminiumoxidfeinfüller vom Typ ASFP der Firma Denka, Japan, (dso = 0,3 $\mu$m) oder Qualitäten wie DAW oder DAM mit den Typenbezeichnungen 45 (dso < 0,44 $\mu$m), 07 (dso > 8,4 $\mu$m), 05 (dso < 5,5 $\mu$m), 03 (dso < 4,1 $\mu$m) eingesetzt werden. Weiterhin können die oberflächenbehandelten Fein- und Feinstfüllstoffe vom Typ Aktisil AM 30 (aminosilan-behandelt, $d_{50}$ = 2,2 $\mu$m) und Aktisil EM (epoxysilanbehandelt, $d_{50}$=2,2 $\mu$m) von Hoffman Mineral verwendet werden. Die Füllstoffe können einzeln oder auch in beliebiger Mischung untereinander verwendet werden. Besonders bevorzugt ist nicht oberflächenbehandeltes Quarzmehl, insbesondere Millisil W12.

Der Gesamtfüllgrad einer Epoxidharzmasse aus den Komponenten (A) und (B) liegt, wenn mindestens ein Füllstoff vorhanden ist, in einem Bereich von >0 bis etwa 60 Gew.-%, bevorzugt in einem Bereich von etwa 10 bis etwa 50 Gew.%, noch bevorzugter in einem Bereich von etwa 15 bis etwa 35 Gew.-%. Der Gesamtfüllgrad der Epoxidharzmasse bezieht sich auf den gewichtsprozentualen Anteil an Füllstoff bezogen auf das Gesamtgewicht aus Komponente (A) und Komponente (B).

Der Anteil der Füllstoffe in der Harzkomponente (A) liegt vorzugsweise bei etwa 1 bis etwa 60 Gew.-%, bevorzugt bei etwa 15 bis etwa 50 Gew.-% bezogen auf das Gesamtgewicht der Harzkomponente (A). Der Anteil der Füllstoffe in der Härterkomponente (B) liegt vorzugsweise bei etwa 1 bis etwa 50 Gew.-%, bevorzugt bei etwa 5 bis etwa 40 Gew.-% bezogen auf das Gesamtgewicht der Härterkomponente (B).

Verdicker und weitere optionale Bestandteile

In einer Ausführungsform kann/können die Harzkomponente (A), die Härterkomponente (B) oder beide Komponenten mindestens einen Verdicker enthalten.

Geeignete Verdicker sind gegebenenfalls organisch nachbehandelte pyrogene Kieselsäure, Bentonite, Alkyl- und Methylcellulosen und Rhizinusölderivate, oder Gemische von zwei oder mehreren davon. Besonders bevorzugt ist organisch nachbehandelte pyrogene Kieselsäure.

In einer bevorzugten Ausführungsform umfasst die Komponente (A) und/oder Komponente (B) eines erfindungsgemäßen Mehrkomponenten-Harzsystems Quarzmehl und Kieselsäure.

Ferner können Haftvermittler zur Verbesserung der Vernetzung eines Untergrunds (beispielsweise einer (Bohr)lochwand) mit einer aus einem Mehrkomponenten-Harzsystem hergestellten Epoxidharzmasse eingesetzt werden. Geeignete Haftvermittler sind Silane, die mindestens eine Si-gebundene hydrolysierbare Gruppe aufweisen.

Bevorzugte Beispiele sind 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan und Trimethoxysilylpropyl-ldiethylentetramin sowie deren Mischungen. Weitere Silane sind beispielsweise in der EP 3 000 792 A1 beschrieben.

Weitere optionale Bestandteile sind Rheologieadditive zur Einstellung der Fließeigenschaften. Geeignete Rheologieadditive sind: Schichtsilikate wie Laponite, Bentonite oder Montmorillonit, Neuburger Kieselerde, pyrogenen Kieselsäure, Polysaccharide; Polyacrylat-, Polyurethan- oder Polyharnstoffverdicker sowie Celluloseester.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

Mischungsverhältnisse der Komponenten (A) und (B):

Die Komponenten (A) und (B) werden bevorzugt in einem solchen Verhältnis gemischt, dass der EEW und der Alkohol-Wasserstoff-Äquivalentgewichts-Wert (alcohol hydrogen equivalent weight, AHEW) eine ausgeglichene Stöchiometrie von reaktiven Epoxidgruppen und primären Alkoholgruppen ergeben.

Wie bereits oben erwähnt, ist das EEW bei kommerziell erhältlichen Epoxidharzen in der Regel von den Herstellern angegeben oder wird nach bekannten Methoden ermittelt bzw. berechnet. Der EEW-Wert gibt die Menge in g Harz an, die 1 Mol Epoxidgruppen enthält und hat die Einheit g/EQ (also g pro Moläquivalent).

Die Bestimmung des AHEW erfolgt rechnerisch; oder experimentell in für den Fachmann bekannter Weise anhand des verwendeten Alkohols. Der AHEW-Wert bezeichnet die Menge in g Alkohol, die 1 Mol primäre OH-Gruppen enthält und hat die Einheit g/EQ (also g pro Moläquivalent).

Der rechnerische AHEW-Wert kann rechnerisch wie oben beschrieben bestimmt werden.

Der experimentelle AHEW-Wert kann experimentell durch Bestimmung der Glasübergangstemperatur (Tg) einer Mischung umfassend ein Epoxidharz (mit bekanntem EEW) und einen oder mehrere Alkohole erhalten werden. Es werden dabei die Glasübergangstemperaturen von Epoxidharz/Alkohol-Mischungen mit unterschiedlichen Verhältnissen bestimmt. Die Probe wird dabei mit einer Heizrate von -10 K/min von 20 auf -50°C abgekühlt, in einem ersten Heizlauf auf 180°C erwärmt (Heizrate 10 K/min), anschließend wieder auf -50°C gekühlt (Heizrate -10 K/min) und im letzten Schritt auf 180°C erwärmt (20 K/min). Die Mischung mit der höchsten Glasübergangstemperatur im zweiten Heizlauf ("Tg2") besitzt das optimale Verhältnis von Epoxidharz und Alkohol. Aus dem bekannten EEW und dem optimalen Epoxidharz/Alkohol-Verhältnis lässt sich der AHEW-Wert wie folgt berechnen.

Beispiel: EEW = 158 g/EQ

Mischung Alkohol/Epoxidharz mit maximaler Tg2: 1 g Alkohol mit 4,65 g Epoxidharz AHEW (Alkohol) = 1 g*158 g/EQ : 4,65 g = 33,9785 g/EQ

Verwendung

Bei der Verwendung werden die Harzkomponente (A) und die Härterkomponente (B) in einer geeigneten Vorrichtung, beispielsweise einem Statikmischer oder einem Dissolver, gemischt, woraus eine Epoxidharzmasse resultiert.

Bei der Verwendung als "chemischer Dübel" zur chemischen Befestigung erfolgt die Mischung direkt vor oder in einem Loch (bevorzugt einem Bohrloch) oder Spalt und die Epoxidharzmasse wird danach mittels einer bekannten Injektionsvorrichtung in das (ggf. zuvor gereinigte) Loch bzw. den Spalt eingebracht. Anschließend wird das zu fixierende Bauteil in die Epoxidharzmasse, welche hier bevorzugt eine Mörtelmasse ist, eingesetzt und justiert. Anschließend härtet die Masse aus.

Bei der Verwendung als Klebstoff oder Beschichtung wird die Epoxidharzmasse auf geeignete Art und Weise (Statikmischer, händisches Verrühren) gemischt und anschließend auf die zu verklebenden Teile bzw. auf den zu beschichtenden Untergrund aufgetragen. Optional kann die Masse zum Aushärten erwärmt werden.

Die reaktiven Bestandteile der Härterkomponente (B) reagieren mit den Epoxidharzen der Harzkomponente (A), so dass die Epoxidharzmasse unter Umgebungsbedingungen, etwa an der Baustelle, innerhalb einer gewünschten Zeit aushärtet. Diese chemische Reaktion ist von der Temperatur, der Feuchtigkeit in Umgebung und Untergrund, der chemischen Zusammensetzung des Untergrunds, sowie von den eingesetzten Bestandteilen der Komponenten (A) und (B) abhängig. Umgebungsbedingungen können variieren, wie z.B. niedrige Temperaturen (z.B. - 5°C) oder hohe Temperaturen (z.B. 40°C) während der Nacht-Tag-Zyklen. Bei hohen Umgebungstemperaturen kann sich der Untergrund aufheizen, wobei Untergrundtemperaturen von über 30°C; sogar über 40°C, und sogar von etwa 100°C oder mehr möglich sind.

Ein erfindungsgemäßes Mehrkomponenten-Harzsystem wird bevorzugt für Bauzwecke eingesetzt. Der Begriff "für Bauzwecke" bedeutet das Baukleben sowie das Beschichten, und die Verwendung des Mehrkomponenten-Harzsystems als chemischer Anker. Dabei sind die Untergründe, auf die oder in die das Mehrkomponenten-System eingebracht wird, bevorzugt nicht-basisch.

Der Einsatz erfolgt insbesondere auf bzw. in Ziegel, Gestein, Stahl oder Holz.

Die Verwendung als Klebstoff (beim Baukleben) erfolgt insbesondere zum Verkleben der Kombinationen Ziegel/Ziegel, Ziegel/Stahl, Holz/Holz, Holz/Stahl, Stahl/Stahl oder von einem der genannten Materialien auf anderen mineralischen Materialien (welche bevorzugt nicht-basisch sind), für die die strukturelle Verstärkung von Bauteilen aus Holz, Mauerwerk und anderen mineralischen Materialien (welche bevorzugt nicht-basisch sind), für die Armierung von Bauobjekten mit faserverstärkten Polymeren, für die chemische Befestigung auf Oberflächen aus Ziegel, Gestein, Holz, Stahl oder anderen mineralischen Materialien (welche bevorzugt nicht-basisch sind).

Die Verwendung als chemischer Dübel erfolgt insbesondere für die chemische Befestigung von Konstruktionselementen und Verankerungsmitteln, wie Ankerstangen, Ankerbolzen, (Gewinde)stangen, (Gewinde)hülsen, Verstärkungseisen, Schrauben und dergleichen, in (Bohr)löchern oder Spalten in verschiedenen Untergründen, wie Mauerwerk, anderen mineralischen Materialien (welche bevorzugt nicht-basisch sind), Metallen (z.B. Stahl), Keramiken, Kunststoffen, Glas und Holz. Die Untergründe sind bevorzugt nicht-basisch. Insbesondere ist der Untergrund bevorzugt kein Beton oder Zement.

Ganz besonders bevorzugt dient ein erfindungsgemäßes Mehrkomponenten-Harzsystem zur chemischen Befestigung von Verankerungselementen in einem Loch (insbesondere einem Bohrloch) oder Spalt in einem Bausubstrat.

Die Verwendung erfolgt typischerweise bei einer Untergrundtemperatur von etwa -10°C bis etwa 180°C. Die Verwendung als chemischer Dübel erfolgt typischerweise bei einer Untergrundtemperatur von etwa -10°C bis etwa 180°C, bevorzugt von etwa 0°C bis etwa 120°C, stärker bevorzugt von etwa 10°C bis etwa 60°C, noch bevorzugter von etwa 20°C bis etwa 40°C, besonders bevorzugt bei einer Untergrundtemperatur von etwa 25°C. Dagegen kann die Verwendung als Klebstoff bevorzugt auch bei Temperaturen von etwa 20°C bis etwa 180°C erfolgen, stärker bevorzugt bei Temperaturen von etwa 50°C bis etwa 150°C, noch bevorzugter von etwa 80°C bis etwa 120°C. Durch eine höhere Temperatur wird ein schnelleres Aushärten erreicht, und/oder es wird weniger Kupfer(II)-tetrafluoroborat benötigt.

Untergrundtemperatur von etwa 120°C bis etwa 180°C sind insbesondere bei externer Wärmezufuhr möglich, wobei externe Wärmezufuhr insbesondere zur Beschleunigung der Befestigung von kleinen Bauteilen in Löchern oder Spalten und insbesondere als Mittel zur Beschleunigung der Aushärtung oder zur Reduktion der für eine Aushärtung erforderlichen Menge Kupfer(II)-tetrafluoroborat geeignet ist.

Für die Verwendung als chemischer Dübel im Baubereich, insbesondere bei großen Bauteilen, hängt die Untergrundtemperatur typischerweise von der Umgebungstemperatur ab.

Außerdem erfolgt die Verwendung als chemischer Dübel typischerweise auf einem in Bauwerken vorkommenden Untergrund wie Stahl, Holz, Gestein oder Ziegel. Dieser Untergrund ist bevorzugt nicht-basisch. Insbesondere ist der Untergrund bevorzugt kein Beton oder Zement.

Bevorzugte Ausführungsformen

Komponente (A):

In einer bevorzugten Ausführungsform umfasst die Komponente (A) eines erfindungsgemäßen Mehrkomponenten-Harzsystems Bisphenol-F-diglycidylether, Quarzmehl und Kieselsäure.

In einer anderen bevorzugten Ausführungsform umfasst die Komponente (A) eines erfindungsgemäßen Mehrkomponenten-Harzsystems Bisphenol-F-diglycidylether und Bisphenol-A-diglycidylether, sowie 1,4-Butandiol-diglycidylether, Trimethylolpropan-triglycidylether, Quarzmehl und Kieselsäure.

In einer besonders bevorzugten Ausführungsform umfasst die Komponente (A) eines erfindungsgemäßen Mehrkomponenten-Harzsystems von etwa 55 bis etwa 65 Gew.-% Bisphenol-F-diglycidylether, sowie von etwa 35 bis etwa 45 Gew.-% Quarzmehl und von etwa 1 bis etwa 3 Gew.-% Kieselsäure, bezogen auf das Gesamtgewicht der Komponente (A).

In einer anderen besonders bevorzugten Ausführungsform umfasst die Komponente (A) eines erfindungsgemäßen Mehrkomponenten-Harzsystems von etwa 35 bis etwa 45 Gew.-% Bisphenol-F-diglycidylether, von etwa 15 bis etwa 25 Gew.-% Bisphenol-A-diglycidylether, sowie von etwa 5 bis etwa 10 Gew.-% 1,4-Butandioldiglycidyl ether, von etwa 5 bis etwa 10 Gew.-% Trimethylolpropan-triglycidylether, von etwa 35 bis etwa 45 Gew.-% Quarzmehl und von etwa 1 bis etwa 3 Gew.-% Kieselsäure, bezogen auf das Gesamtgewicht der Komponente (A).

Komponente (B):

In einer bevorzugten Ausführungsform umfasst die Komponente (B) eines erfindungsgemäßen Mehrkomponenten-Harzsystems 1,2,3-Propantriol und Kupfer(II)-tetrafluoroborat Hydrat.

In einer stark bevorzugten Ausführungsform umfasst die Komponente (B) eines erfindungsgemäßen Mehrkomponenten-Harzsystems von etwa 40 bis etwa 65 Gew.-% 1,2,3-Propantriol und von etwa 5 bis etwa 25 Gew.-% Kupfer(II)-tetrafluoroborat Hydrat, bezogen auf das Gesamtgewicht der Komponente (B).

In einer noch stärker bevorzugten Ausführungsform umfasst die Komponente (B) eines erfindungsgemäßen Mehrkomponenten-Harzsystems von etwa 40 bis etwa 65 Gew.-% 1,2,3-Propantriol und von etwa 5 bis etwa 25 Gew.-% Kupfer(II)-tetrafluoroborat Hydrat, von etwa 10 bis etwa 40 Gew.-% Quarzmehl und von etwa 1 bis etwa 3 Gew.-% Kieselsäure, bezogen auf das Gesamtgewicht der Komponente (B).

In einer weiteren stark bevorzugten Ausführungsform umfasst die Komponente (B) eines erfindungsgemäßen Mehrkomponenten-Harzsystems von etwa 40 bis etwa 65 Gew.-% 1,2,3-Propantriol, von etwa 30 bis etwa 40 Gew.-% eines weiteren primären Alkohols mit einer OH-Funktionalität von etwa 2 oder größer, und von etwa 5 bis etwa 25 Gew.-% Kupfer(II)-tetrafluoroborat Hydrat, bezogen auf das Gesamtgewicht der Komponente (B).

In einer noch stärker bevorzugten Ausführungsform umfasst die Komponente (B) eines erfindungsgemäßen Mehrkomponenten-Harzsystems von etwa 40 bis etwa 65 Gew.-% 1,2,3-Propantriol, von etwa 30 bis etwa 40 Gew.-% eines weiteren primären Alkohols mit einer OH-Funktionalität von etwa 2 oder größer, und von etwa 5 bis etwa 25 Gew.-% Kupfer(II)-tetrafluoroborat Hydrat, von etwa 10 bis etwa 40 Gew.-% Quarzmehl und von etwa 1 bis etwa 3 Gew.-% Kieselsäure, bezogen auf das Gesamtgewicht der Komponente (B).

Komponenten A+B

Ganz besonders bevorzugt als Bestandteile eines erfindungsgemäßen Mehrkomponenten-Harzsystems sind die Kombinationen aus den Epoxidharzen und den primären Alkoholen, welche in den Beispielzusammensetzungen verwendet werden, insbesondere in den dort verwendeten Gewichtsanteilen und ganz besonders bevorzugt in Kombination mit den dort verwendeten anderen Bestandteilen der Komponenten (A) und (B). Am bevorzugtesten sind diejenigen Zusammensetzungen der Komponenten (A) und (B), welche in den Beispielen beschrieben werden.

In einer besonders bevorzugten Ausführungsform eines erfindungsgemäßen Mehrkomponenten-Harzsystems umfasst die Komponente (A) von etwa 55 bis etwa 65 Gew.-% Bisphenol-F-diglycidylether, sowie von etwa 35 bis etwa 45 Gew.-% Quarzmehl und von etwa 1 bis etwa 3 Gew.-% Kieselsäure bezogen auf das Gesamtgewicht der Komponente (A); und die Komponente (B) von etwa 40 bis etwa 65 Gew.-% 1,2,3-Propantriol, von etwa 5 bis etwa 25 Gew.-% Kupfer(II)-tetrafluoroborat Hydrat, von etwa 10 bis etwa 40 Gew.-% Quarzmehl und von etwa 1 bis etwa 3 Gew.-% Kieselsäure bezogen auf das Gesamtgewicht der Komponente (B).

In einer anderen besonders bevorzugten Ausführungsform eines erfindungsgemäßen Mehrkomponenten-Harzsystems umfasst die Komponente (A) von etwa 35 bis etwa 45 Gew.-% Bisphenol-F-diglycidylether, von etwa 15 bis etwa 25 Gew.-% Bisphenol-A-diglycidylether, sowie etwa 5 bis etwa 10 Gew.-% 1,4-Butandiol-diglycidylether und von etwa 5 bis etwa 10 Gew.-% Trimethylolpropan-triglycidylether, von etwa 35 bis etwa 45 Gew.-% Quarzmehl und von etwa 1 bis etwa 3 Gew.-% Kieselsäure bezogen auf das Gesamtgewicht der Komponente (A); und die Komponente (B) von etwa 40 bis etwa 65 Gew.-% 1,2,3-Propantriol, von etwa 5 bis etwa 25 Gew.-% Kupfer(II)-tetrafluoroborat Hydrat, von etwa 10 bis etwa 40 Gew.-% Quarzmehl und von etwa 1 bis etwa 3 Gew.-% Kieselsäure bezogen auf das Gesamtgewicht der Komponente (B).

Die Erfindung wird im Folgenden anhand von Ausführungsbeispielen weiter beschrieben, die jedoch nicht in einem einschränkenden Sinn verstanden werden sollen.

**AUSFÜHRUNGSBEISPIELE**

**Herstellung der Komponenten (A) und (B)**

Die verwendeten Bestandteile der Komponenten (A) und (B) sind in Tabelle 2 aufgelistet.

**Tabelle 2: Verwendete Bestandteile**

| Bestandteil | Funktion | Handelsname oder CAS | Hersteller | Land |
|---|---|---|---|---|
| Bisphenol F-basiertes Epoxidharz | Epoxidharz | Araldite® GY 282 | Huntsman | Belgien |
| Bisphenol A-basiertes Epoxidharz | Epoxidharz | Araldite® GY 240 | Huntsman | Belgien |
| 1,4-Butandiol-diglycidylether | Reaktiverdünner | Araldite® DY-026 | Huntsman | Belgien |
| Trimethylolpropan-triglycidylether | Reaktiverdünner | Araldite® DY-T | Huntsman | Belgien |
| Kupfer(II)-tetrafluoroborat Hydrat | Beschleuniger | Kupfer(II)-tetrafluoroborat Hydrat | Sigma Aldrich | Deutschland |
| 1,2,3-Propantriol | Alkoholischer Härter | Glycerin | Merck | Deutschland |
| 1,3-Benzoldimethanol | Alkoholischer Härter | 626-18-6 | Sigma-Aldrich | Deutschland |
| 2,6-Bis(hydroxymethyl)-p-kresol | Alkoholischer Härter | , 91-04-3 | Sigma-Aldrich | Deutschland |
| 4,8-Bis(hydroxymethyl) tricyclo [5.2.1.0$^{2,6}$]decan | Alkoholischer Härter | 26896-48-0 | Sigma-Aldrich | Deutschland |
| Quarzmehl | Füllstoff | Millisil® W1 2 | Quarzwerke Frechen | Deutschland |
| Zement | Füllstoff | Supracem 45 | Schretter & Cie GmbH & Co KG | Österreich |
| Kieselsäure | Verdicker | Cab-O-Sil® TS-720 | Cabot Rheinfelden | Deutschland |

Die Anteile der einzelnen Bestandteile an den Komponenten (A) und (B) in den Beispielen A1-A5, B1-B3 und C1-C4 sind jeweils weiter unten in den Tabellen 3, 7 und 9 in Gewichtsprozent (Gew.-%) angegeben.

Zur Herstellung der Harzkomponente (A) wurden zunächst deren flüssige Bestandteile gemischt. Anschließend wurden Quarzmehl und Kieselsäure zugegeben und in einem Dissolver (PC Laborsystem, Volumen 1L) unter Vakuum bei 3500 U/min für 10 min gerührt.

Zur Herstellung der Härterkomponente (B) wurden die darin enthaltenen Alkohole gemischt. Anschließend wurde Kupfer(II)-tetrafluoroborat Hydrat zugegeben und in der entstandenen Mischung gelöst. Danach wurden das Quarzmehl und die Kieselsäure zugegeben und in einem Dissolver (PC Laborsystem, Volumen 1L) unter Vakuum bei 3500 U/min für 10 min gerührt.

**Vorbereitung für die Verwendung der Komponenten (A) und (B)**

Für die Verwendung als chemischer Dübel, als Klebstoff oder als Beschichtung wurden die Komponenten (A) und (B) kurz vor deren Einsatz mit Hilfe eines Speedmixers (Fa. Hauschild, Hamm) 30 sec miteinander vermischt und die erhaltene Mischung unmittelbar danach in eine 1-Komponenten-Kartusche gefüllt. Das Mischungsverhältnis wurde so gewählt, dass sich aus EEW und AHEW, wie oben beschrieben, eine ausgeglichene Stöchiometrie ergab. Aus der 1-Komponenten-Kartusche erfolgte durch eine Düse die Injektion am gewünschten Einsatzort.

### Messmethoden für die Charakterisierung der Mehrkomponenten-Harzsysteme

Zur Charakterisierung eines Mehrkomponenten-Harzsystems wurden nach Vermischen von dessen Komponenten (A) und (B) die Gelzeit, ShoreA-Härte, ShoreD-Härte, Zugscherfestigkeit und/oder Glasübergangstemperatur der entstandenen Mischung analysiert. Diese Parameter sind Kenngrößen zur Feststellung der Eignung eines Mehrkomponenten-Harzsystems für die erfindungsgemäße Verwendung als chemischer Dübel, Beschichtung und/oder Klebstoff.

### Bestimmung der Gelzeit

Es wurden 20 mL einer Epoxidharzmasse aus den Komponenten (A) und (B) hergestellt, und diese in einem Speedmixer für 30 s vermischt. Das Mischungsverhältnis wurde so gewählt, dass sich aus EEW und AHEW eine ausgeglichene Stöchiometrie ergab.

Unmittelbar nach dem Mischen wurde im Silikonbad auf 25°C temperiert und die Temperatur der Probe gemessen. Die Bestimmung der Gelzeit erfolgte mit einer handelsüblichen Vorrichtung (GELNORM®- Gel Timer) bei einer Temperatur von 25°C. Die Probe selbst befindet sich dabei in einem Reagenzglas, das in einen im Silikonbad versenkten Luftmantel zur Temperierung gesetzt wird. Die Wärmeentwicklung der Probe wird gegen die Zeit aufgetragen. Die Auswertung erfolgt gemäß DIN 16945. Es wurden das erreichte Temperaturmaximum ($T_{max}$) und die Zeit, nach der das Temperaturmaximum erreicht wurde (= Gelzeit, $t_{Tmax}$) bestimmt.

### Bestimmung der ShoreA- und ShoreD-Härte

Es wurde mit Hilfe der 1-Komponenten-Kartusche die wie oben (unter "Vorbereitung") beschrieben hergestellte Epoxidharzmasse, bestehend aus den Komponenten (A) und (B), aus der 1-Komponenten-Kartusche zur Verwendung als Beschichtung in einen Aluminiumtiegel gegeben, zu einer 0,4 cm dünnen Schicht ausgestrichen und anschließend bei 25°C ausgehärtet. Die Shore-Härte wurde entsprechend der Norm ASTM D2240 bestimmt.

Die Shore A-Härte der 0,4 cm dünnen Schicht der aushärtenden Epoxidharzmasse wurde 4,5 h bzw. 6,5 h (siehe weiter unten) nach dem Ausstreichen mit dem Härteprüfgerät HBD 100-0 der Firma Sauter GmbH gemessen.

Die Shore D-Härte der 0,4 cm dünnen Schicht der ausgehärteten Epoxidmasse wurde 24 h nach dem Ausstreichen mit dem Härteprüfgerät HBD 100-0 der Firma Sauter GmbH gemessen.

### Auszugsversuche

Für Auszugsversuche aus Holz wurde gemäß EAD 130006-00-0304 wie folgt vorgegangen: Zunächst wurden Bohrlöcher (Durchmesser wie unten bei den einzelnen Beispielen angegeben, Bohrlochtiefe 122 mm) in einen horizontal liegenden Prüfkörper aus GLT (*glue laminated timber, Fichtenholz*) mit einem Hammerbohrer gebohrt. Die Bohrlöcher wurden gereinigt (2× Ausblasen mit 6 bar Druckluft). Anschließend wurden die Bohrlöcher vom Bohrlochgrund her mit der jeweiligen zu prüfenden härtbaren Epoxidharzmasse, welche wie oben beschrieben (unter "Vorbereitung")aus den jeweiligen Komponenten (A) und (B) hergestellt wurde, mit Hilfe der 1-Komponenten-Kartusche zu zwei Dritteln befüllt. Je Bohrloch wurde eine Stahl-Gewindestange (Durchmesser wie unten bei den Beispielen angegeben) von Hand eingedrückt (Einbindetiefe wie im jeweiligen Beispiel angegeben). Der Überschuss der Epoxidharzmasse wurde mittels eines Spachtels entfernt. Die Aushärtung erfolgte bei 25°C. Nach der für den jeweiligen Versuch angegebenen Zeit wurde die Gewindestange herausgezogen bis zum Versagen unter Messung der Versagenslast. Für die Auszugsversuche wurde eine Abstützung mit einem Durchmesser von 26 mm verwendet.

Für Auszugsversuche aus Ziegel wurde gemäß EAD 330076-00-0604 wie folgt vorgegangen: Zunächst wurden Bohrlöcher (Durchmesser wie bei den Beispielen angegeben, Bohrlochtiefe ca. 87 mm) in einen horizontal liegenden Vollziegel (Lieferant: Rais Ziegel Schmid, Schwabmünchen, Deutschland; Abmessungen: 240x113x113 mm; Druckfestigkeit: 21,8 N/mm$^2$; Brutto-Rohdichte 1,8 kg/dm$^3$) mit einem Hammerbohrer gebohrt. Die Bohrlöcher wurden gereinigt (2× Ausblasen (Druckluft) 6 bar, 2x Bürsten, 2× Ausblasen (Druckluft 6 bar)). In die gereinigten Bohrlöcher wurden Siebhülsen (Typ bei jeweiligen Beispielen angegeben) gesteckt. Anschließend wurden die Siebhülsen vom Grund her mit der jeweiligen zu prüfenden härtbaren Epoxidharzmasse, welche wie oben beschrieben (unter "Vorbereitung")aus den jeweiligen Komponenten (A) und (B) hergestellt wurde, mit Hilfe der 1-Komponenten-Kartusche zu zwei Dritteln befüllt. Je Bohrloch wurde eine Stahl-Gewindestange (Durchmesser wie unten bei den Beispielen angegeben) von Hand eingedrückt (Einbindetiefe wie im Beispiel angegeben). Der Mörtelüberschuss wurde mittels eines Spachtels entfernt. Nach Aushärtung bei 25°C für die beim jeweiligen Beispiel angegebene Zeit wurde die Gewindestange gezogen bis zum Versagen unter Messung der Versagenslast.

Für Auszugsversuche aus Beton wurde gemäß EAD 330499-00-0601 wie folgt vorgegangen: Zunächst wurden Bohrlöcher (Durchmesser 14 mm; Bohrlochtiefe 62 mm) in einen horizontal liegenden Betonprüfkörper (Festigkeitsklasse C20/25) mit einem Hammerbohrer gebohrt. Die Bohrlöcher werden gereinigt (2× Ausblasen (Druckluft) 6 bar, 2× Bürsten, 2× Ausblasen (Druckluft 6 bar)). Anschließend wurden die Bohrlöcher vom Bohrgrund her mit der härtbaren Epoxidharzmasse, welche wie oben beschrieben (unter "Vorbereitung")aus den jeweiligen Komponenten (A) und (B) hergestellt wurde, mit Hilfe der 1-Komponenten-Kartusche zu zwei Dritteln befüllt. Je Bohrloch wurde eine Stahl-Gewindestange (Durchmesser wie unten bei den Beispielen angegeben) von Hand eingedrückt (Einbindetiefe wie im Beispiel angegeben). Der Mörtelüberschuss wurde mittels eines Spachtels entfernt. Nach Aushärtung bei 25°C für die beim jeweiligen Beispiel angegebene Zeit wurde die Gewindestange gezogen bis zum Versagen unter Messung der Versagenslast.

**Bestimmung der Zugscherfestigkeit**

Die wie oben beschrieben (unter "Vorbereitung")aus den jeweiligen Komponenten (A) und (B) hergestellte Epoxidharzmasse wurde mit Hilfe der 1-Komponenten-Kartusche auf einer Stahlplatten auf einer Fläche von 12 × 25 mm in einer Schichtdicke von 2 mm aufgebracht, und anschließend eine zweite Stahlplatte händisch darauf gepresst. Die Härtung erfolgte für 1 bzw. 2 h bei 100°C. Im Anschluss wurde die Zugscherfestigkeit nach DIN EN 1465:2009-07 mit einer Prüfgeschwindigkeit von 10 mm/min bestimmt.

**Bestimmung der Glasübergangstemperatur**

Zur Bestimmung der Glasübergangstemperatur wurde die durch Mischen im Speedmixer (30 sec) erhaltene Epoxidharzmasse, bestehend aus den Komponenten (A) und (B) des Mehrkomponenten-Harzsystems, für 24h bei 25°C ausgehärtet. Die Probe wurde für die Aushärtung mit einer Schichtdicke von 1 mm ausgestrichen und härtete in dieser Schichtdicke aus. Für die Messung wurde eine Menge von ca. 15 mg der so ausgehärteten Probe verwendet. Die Glasübergangstemperatur wurde mit Hilfe der Differential scanning calorimetry (DSC)-Methode bestimmt (STARe System DSC des Herstellers Mettler Toledo). Die Probe wurde mit einer Heizrate von -10 K/min von 20°C auf -50°C abgekühlt und dort für 5 min gehalten, bevor die Probe dann in einem ersten Heizlauf auf 180°C erwärmt (Heizrate 10 K/min), dort für 5 min gehalten, anschließend wieder auf -50°C gekühlt (Heizrate -10 K/min), dort für 5 min gehalten und im letzten Schritt erneut auf 180°C erwärmt (20 K/min) wurde. Die "Tg1" wurde dabei im ersten und die "Tg2" im zweiten Heizlauf graphisch ermittelt.

**Beispiele A1-A5**

Es wurden die Mehrkomponenten-Harzsysteme der (Vergleichs)bespiele A1-A5 gemäß der Tabelle 3 getestet.

**Tabelle 3: Beispiele A1-A5**

| | | Beispiele (Gewichtsanteile in Gew.-%) | | | | |
|---|---|---|---|---|---|---|
| **Bestandteile** | **Funktion** | **A1\*** | **A2** | **A3** | **A4** | **A5** |
| **Komponente (A)** | | | | | | |
| Bisphenol F-basiertes Epoxidharz | Epoxidharz | 58,0 | 58,0 | 58,0 | 58,0 | 58,0 |
| Quarzmehl | Füllstoff | 40,7 | 40,7 | 40,7 | 40,7 | 40,7 |
| Kieselsäure | Verdicker | 1,3 | 1,3 | 1,3 | 1,3 | 1,3 |
| **Komponente (B)** | | | | | | |
| 1,2,3-Propantriol | Alkoholischer Härter | 63,0 | 63,0 | 63,0 | 63,0 | 63,0 |
| Kupfer(II)-tetrafluoroborat Hydrat | Beschleuniger | 0,0 | 10,0 | 15,0 | 20,0 | 25,0 |
| Quarzmehl | Füllstoff | 34,6 | 24,6 | 19,6 | 14,6 | 9,6 |
| Kieselsäure | Verdicker | 2,4 | 2,4 | 2,4 | 2,4 | 2,4 |
| \*Vergleichsbeispiel  EEW = 290 g/EQ (Herstellerangaben), AHEW = 73 g/EQ (wie oben beschrieben berechnet) | | | | | | |

Beispiel A1 ist ein nicht erfindungsgemäßes Vergleichsbeispiel, in dem das Kupfer(II)-tetrafluoroborat Hydrat fehlt.

**Ergebnisse A1-A5 für Gelzeit $t_{Tmax}$ und Temperaturmaximum $T_{max}$**

Die Testergebnisse der (Vergleichs)beispiele A1-A5 in Tabelle 4 zeigen, dass der Einsatz des Kupfer(II)tetrafluoroborat Hydrats in der Komponente (B) eine Aushärtung der Epoxidharzmasse nach dem Vermischen der Komponenten (A) und (B) ermöglicht, während in Abwesenheit von Kupfer(II)-tetrafluoroborat Hydrat im Vergleichsbeispiel A1 keine Härtungsreaktion stattfindet. Dabei führt ein Anteil von 10 Gew-% Kupfer(II)tetrafluoroborat Hydrat in Komponente (B) in Beispiel A2 zunächst zu einer langsamen Aushärtung ohne erkennbaren Temperaturanstieg. Mit zunehmendem Gewichtsanteil an Kupfer(II)-tetrafluoroborat Hydrat in Komponente (B) wird die Gelzeit $t_{Tmax}$ kürzer, woraus man auf eine schnellere Aushärtung schließen kann. Zeitgleich steigt auch die maximal erreichte Temperatur $T_{max}$, da durch die exotherme Härtungsreaktion in kürzerer Zeit die Reaktionswärme freigesetzt wird. Somit lässt sich die Aushärtezeit durch die eingesetzte Menge an Kupfer(II)tetrafluoroborat Hydrat steuern.

**Tabelle 4: Für Beispiele A1 bis A5 ermittelte Gelzeit $t_{Tmax}$ und $T_{max}$**

|  | **A1** | **A2** | **A3** | **A4** | **A5** |
|---|---|---|---|---|---|
| $t_{Tmax}$ | keine Aushärtung | Langsame Aushärtung (>1h) | 37,9 min | 19,1 min | 11,0 min |
| $T_{max}$ | keine Aushärtung | n.b. | 60,80 °C | 124,34 °C | 138,9 °C |
| *n.b. = nicht bestimmt | | | | | |

**Ergebnisse A3 und A4 für Shore A- und Shore D-Härte**

Die Epoxidharzmassen aus den Beispielen A3 und A4 wurden als Beschichtung wie oben beschrieben aufgetragen und deren Shore A- und Shore D-Härten wie oben beschrieben bestimmt. Die Testergebnisse in Tabelle 5 zeigen, dass die Beschichtung hergestellt aus der Epoxidharzmasse A4 bereits nach 4,5 h eine höhere Shore A-Härte als die Beschichtung hergestellt aus der Epoxidharzmasse A3 nach 6,5 h hatte. Die Shore D-Härte erreicht bei A3 und A4 denselben Wert. Somit eignen sich die Epoxidharzmassen auch als Beschichtung, wobei ein höherer Anteil an Kupfer(II)-tetrafluoroborat Hydrat schneller zu einer härteren Beschichtung führt.

**Tabelle 5: Für Beispiele A3 und A4 ermittelte Shore A- und Shore D-Härte bei einer Schichtdicke von 0,4 cm**

|  | **A3** | **A4** |
|---|---|---|
| Shore A-Härte nach 4,5 h bei 25°C | n.b.* | 54 |
| Shore A-Härte nach 6,5 h bei 25°C | 45 | 85 |
| Shore D-Härte nach 24 h bei 25°C | 70 | 70 |
| *n.b. = nicht bestimmt | | |

Die gemessenen Härten sind für Beschichtungen üblich (übliche Beschichtungs-Shore D-Härten liegen typischerweise zwischen 50 und 100), was die Eignung der getesteten Epoxidharzmassen zur Herstellung von Beschichtungen belegt.

**Ergebnisse A2 und A4 für Auszugsversuche**

Die Komponenten (A) und (B) des Beispiels A2 wurden wie oben beschrieben vermischt und mit einem wie oben beschriebenen Auszugsversuch aus Holz getestet. In dem Auszugsversuch wurde eine Gewindestange M12 verwendet, wobei der Bohrlochdurchmesser 14 mm und die Einbindetiefe 120 mm betrugen. Die gemessene Zugkraft (in kN) wurde durch die Fläche der Bohrlochwandung (in mm$^2$) geteilt und so in einen Zugwiderstand (in MPa) umgerechnet. Der so berechnete Zugwiderstand ist in Tabelle 6 dargestellt.

**Tabelle 6: Auszugsversuche aus Holz an Beispiel A2**

| Aushärtezeit bei 25°C [Stunden] | Zugwiderstand [MPa] |
|---|---|
| 120 | 3,6 |
| 192 | 5,2 |

Diese Ergebnisse sind für chemische Dübel akzeptable Zugwiderstände.

Die Komponenten (A) und (B) des Beispiels A2 wurden wie oben beschrieben vermischt und mit einem wie oben beschriebenen Auszugsversuch aus Beton getestet. In dem Auszugsversuch wurde eine Gewindestange M12 verwendet, wobei die Einbindetiefe 60 mm betrug. Auch nach 24 Stunden bei 25°C war noch keine Aushärtung zu beobachten. Dies zeigt, dass das Epoxidharz für die Verankerung in Beton nicht geeignet ist.

Die Komponenten (A) und (B) des Beispiels A4 wurden wie oben beschrieben vermischt und mit einem wie oben beschriebenen Auszugsversuch aus Ziegel getestet.

Bohrlochdurchmesser 16 mm, Siebhülse HIT-SC 16×85, Gewindestange M10, Einbindetiefe 80 mm.

Nach 24 Stunden Aushärtung bei 25°C betrug die gemessene Versagenslast 19,1 kN. Diese Versagenslast ist in der Größenordnung, wie sie bei marktüblichen chemischen Dübeln gemessen wird.

### Beispiele B1-B3

Es wurden die Mehrkomponenten-Harzsysteme der Beispiele B1-B3 gemäß der Tabelle 7 getestet.

**Tabelle 7: Beispiele B1-B3**

| Bestandteile | Funktion | Beispiele (Gewichtsanteile in Gew.-%) | | |
| --- | --- | --- | --- | --- |
| | | B1 | B2 | B3 |
| **Komponente (A)** | | | | |
| Bisphenol F-basiertes Epoxidharz | Epoxidharz | 41,6 | 41,6 | 41,6 |
| Bisphenol A-basiertes Epoxidharz | Epoxidharz | 22,4 | 22,4 | 22,4 |
| 1,4-Butandiol-diglycidylether | Reaktiwerdünner | 8,0 | 8,0 | 8,0 |
| Trimethylolpropan-triglycidylether | Reaktiwerdünner | 8,0 | 8,0 | 8,0 |
| Quarzmehl | Füllstoff | 18,0 | 18,0 | 18,0 |
| Kieselsäure | Verdicker | 2,0 | 2,0 | 2,0 |
| **Komponente (B)** | | | | |
| 1,2,3-Propantriol | Alkoholischer Härter | 55,8 | 55,8 | 55,8 |
| Kupfer(II)-tetrafluoroborat Hydrat | Beschleuniger | 5,0 | 10,0 | 20,0 |
| Quarzmehl | Füllstoff | 37,0 | 32,0 | 22,0 |
| Kieselsäure | Verdicker | 2,2 | 2,2 | 2,2 |
| EEW = 198 g/EQ (Herstellerangaben), AHEW = 82 g/E wie oben beschrieben berechnet) | | | | |

### Ergebnisse B1-B3 für Zugscherfestigkeit

Die Beispiele B1-3 wurden wie oben beschrieben auf ihre Zugscherfestigkeit getestet. Die Testergebnisse in Tabelle 8 zeigen, dass die Zugscherfestigkeit mit höherem Anteil an Kupfer(II)-tetrafluoroborat Hydrat in der Komponente (B) und längerer Härtungsdauer steigt.

**Tabelle 8: Zugscherfestigkeit bei der Verwendung als Klebstoff für B1-B3**

| | B1 | B2 | B2 | B3 |
| --- | --- | --- | --- | --- |
| **Dauer Härtung bei 100 °C** | 2 h | 1 h | 2 h | 1 h |
| **Zugscherfestigkeit** | 1,5 N/mm$^2$ | 1,0 N/mm$^2$ | 2,7 N/mm$^2$ | 2,7 N/mm$^2$ |

### Beispiele C1-C4

Tabelle 9 zeigt Zusammensetzungen der Komponenten (A) und (B) der Beispiele C1-C4, die verschiedene Alkohole in der Komponente (B) enthalten. C1 enthält lediglich Glycerin, C2-C4 enthalten Mischungen anderer Alkohole mit Glycerin.

**Tabelle 9: Beispiele C1-C4 mit unterschiedlichen Alkoholen**

| Bestandteile | Funktion | Beispiele (Gewichtsanteile in Gew.-%) | | | |
|---|---|---|---|---|---|
| | | C1 | C2 | C3 | C4 |
| **Komponente (A)** | | | | | |
| Bisphenol A-basiertes Epoxidharz | Epoxidharz | 52 | 52 | 52 | 52 |
| Bisphenol F-basiertes Epoxidharz | Epoxidharz | 28 | 28 | 28 | 28 |
| 1,4-Butandiol-diglycidylether | Reaktiwerdünner | 10 | 10 | 10 | 10 |
| Trimethylolpropantriglycidylether | Reaktiwerdünner | 10 | 10 | 10 | 10 |
| **Komponente (B)** | | | | | |
| 1,2,3-Propantriol | Alkoholischer Härter | 80 | 40 | 40 | 40 |
| 1,3-Benzoldimethanol | Alkoholischer Härter | | 40 | | |
| 2,6-Bis(hydroxymethyl)-p-kresol | Alkoholischer Härter | | | 40 | |
| 4,8-Bis(hydroxymethyl)tricyclo-[5.2.1.0$^{26}$]decan | Alkoholischer Härter | | | | 40 |
| Kupfer(II)-tetrafluoroborat Hydrat | Beschleuniger | 20 | 20 | 20 | 20 |
| **Stöchiometrie A:B** | | | | | |
| EEW [g/EQ] (Herstellerangaben) | | 158 | 158 | 158 | 158 |
| AHEW* [g/EQ] (wie oben beschrieben berechnet) | | 58 | 69 | 74 | 78 |

Für die Beispiele C1-C4 wurde die Glasübergangstemperatur wie oben beschrieben bestimmt. Die Testergebnisse in Tabelle 10 zeigen, dass die gehärteten Epoxidharzmassen ähnliche Glasübergangstemperaturen für Tg1 im Bereich von -17,5°C bis 9,5°C und für Tg2 im Bereich von 30°C bis 59°C aufweisen und sich folglich auch diese gehärteten Epoxidharzmassen zur erfindungsgemäßen Verwendung eignen.

**Tabelle 10: Glastemperaturen der Beispiele C1-C4**

| | C1 | C2 | C3 | C4 |
|---|---|---|---|---|
| Tg1 [°C] | 9,5 | -17,5 | -1 | -12 |
| Tg2 [°C] | 59 | 30 | 59 | 44 |

### Beispiel D1

Analog zu Beispiel A4 wurde in Beispiel D1 in der Komponente (B) Quarzmehl durch Zement als Füllstoff ersetzt.

**Tabelle 11: Beispiel mit Zement als Füllstoff**

| Bestandteile | Funktion | Beispiel (Gewichtsanteile in Gew.-%) |
|---|---|---|
| | | D1 |
| **Komponente (A)** | | |
| Bisphenol F-basiertes Epoxidharz | Epoxidharz | 58,0 |
| Quarzmehl | Füllstoff | 40,7 |
| Kieselsäure | Verdicker | 1,3 |
| **Komponente (B)** | | |
| 1,2,3-Propantriol | Alkoholischer Härter | 63,0 |
| Kupfer(II)-tetrafluoroborat Hydrat | Beschleuniger | 20,0 |
| Zement | Füllstoff | 14,6 |

(fortgesetzt)

| Komponente (B) | | |
|---|---|---|
| Kieselsäure | Verdicker | 2,4 |
| EEW = 290 g/EQ (Herstellerangaben), AHEW = 73 g/EQ (wie oben beschrieben berechnet) | | |

Die Komponenten (A) und (B) des Beispiels D1 wurden wie oben beschrieben vermischt. Die Prüfung auf Aushärtung erfolgte hier durch Rühren mit einem Holzspatel. Die Epoxidharzmasse zeigte bei 25°C innerhalb von 24 h keine beobachtbare Aushärtung, d.h. sie war wie direkt nach dem Mischen sehr niedrigviskos. Dieses Beispiel zeigt, dass Zement als Füllstoff ungeeignet ist.

**Patentansprüche**

1. Mehrkomponenten-Harzsystem umfassend

   mindestens eine Harzkomponente (A) umfassend mindestens ein härtbares Epoxidharz; und
   mindestens eine Härterkomponente (B) umfassend einen Härter für das in der Harzkomponente (A) enthaltene Epoxidharz, wobei es sich bei dem Härter um mindestens einen primären Alkohol mit einer mittleren OH-Funktionalität von etwa 2 oder größer handelt;
   ferner umfassend Kupfer(II)-tetrafluoroborat in wasserfreier Form oder als Hydrat.

2. Das Mehrkomponenten-Harzsystem gemäß Anspruch 1, in Form eines Zwei-Komponenten-Systems.

3. Das Mehrkomponenten-Harzsystem gemäß Anspruch 1 oder 2, wobei das Kupfer(II)-tetrafluoroborat nur in der Komponente (B) enthalten ist.

4. Das Mehrkomponenten-Harzsystem gemäß Anspruch 3, wobei das Kupfer(II)-tetrafluoroborat mit einem Stoffmengenanteil von etwa 0,1 bis etwa 20 mol-% bezogen auf die Stoffmenge des mindestens eines Alkohols in der Komponente (B) enthalten ist, bevorzugt das Kupfer(II)-tetrafluoroborat mit einem Stoffmengenanteil von etwa 1 bis etwa 20 mol-% bezogen auf die Stoffmenge des mindestens eines Alkohols in der Komponente (B) enthalten ist.

5. Das Mehrkomponenten-Harzsystem gemäß irgendeinem der Ansprüche 1 bis 4, wobei es sich bei dem härtbaren Epoxidharz um eine Verbindung ausgewählt aus der Gruppe bestehend aus Glycidylethern mehrwertiger Phenole mit einer Epoxid-Funktionalität von etwa 1,5 oder größer und epoxidierten Pflanzenölen, sowie Mischungen daraus handelt; bevorzugt um Glycidylether basierend auf Resorcin, Bisphenol A und F, Novolake, 4,4'-Dihydroxyphenylcyclohexanisosorbid-diglycidylether, 4,4'-Dihydroxy-3,3'-dimethyldiphenylpropan-isosorbid-diglycidylether, Limonen-1,2:8,9-dioxid, Vanillin-diglycidylether, Phloroglycinol-triglycidylether, Vanillinsäure-bisepoxid, epoxidiertes Rizinusöl und epoxidiertes Cardanolöl, sowie Mischungen daraus handelt.

6. Das Mehrkomponenten-Harzsystem gemäß irgendeinem der Ansprüche 1 bis 5, wobei es sich bei dem mindestens einen primären Alkohol um eine Verbindung ausgewählt aus der Gruppe bestehend aus 1,2,3-Propantriol (Glycerin), 1,3-Benzoldimethanol, 1,3-Cyclohexandiol, 2,6-Bis(hydroxymethyl)-p-kresol, 4,8-Bis(hydroxymethyl)tricyclo[5.2.1.02,6]decan, 1,3-Propandiol, 1,5-Pentandiol und 1,4-Butandiol, sowie Mischungen daraus handelt, wobei der mindestens eine primäre Alkohol bevorzugt 1,2,3-Propantriol oder eine Mischung aus 1,2,3-Propantriol und einem oder mehreren weiteren Alkoholen mit einer mittleren OH-Funktionalität von etwa 2 oder größer ist.

7. Das Mehrkomponenten-Harzsystem gemäß einem der Ansprüche 1 bis 6, zusätzlich umfassend mindestens einen Füllstoff, wobei der Füllstoff entweder in Komponente (A) oder in Komponente (B) oder in beiden Komponenten (A) und (B) enthalten ist.

8. Das Mehrkomponenten-Harzsystem gemäß Anspruch 7, wobei es sich bei dem Füllstoff um eine Verbindung ausgewählt aus der Gruppe bestehend aus Oxiden von Silizium und Aluminium, optional mit zusätzlichen weiteren Kationen, handelt, bevorzugt ausgewählt aus der Gruppe bestehend aus Quarz, Silikaten und Aluminaten, insbesondere um Quarzmehl handelt.

9. Das Mehrkomponenten-Harzsystem gemäß Anspruch 7, wobei es sich bei dem Füllstoff um einen nicht-basischen Füllstoff handelt, und wobei es sich bevorzugt bei dem Füllstoff nicht um Zement handelt.

10. Epoxidharzmasse hergestellt durch Vermischen der Harzkomponente (A) und der Härterkomponente (B) des Mehrkomponenten-Harzsystems gemäß irgendeinem der Ansprüche 1 bis 9, **dadurch gekennzeichnet, dass** das Mischungsverhältnis der mindestens einen Harzkomponente (A) zur mindestens einen Härterkomponente (B) so gewählt ist, dass das stöchiometrische Verhältnis zwischen reaktiven Epoxidgruppen und primären Alkoholgruppen etwa 1:1 ist.

11. Verwendung des Mehrkomponenten-Harzsystems gemäß irgendeinem der Ansprüche 1 bis 9 oder der Epoxidharzmasse gemäß Anspruch 10 als Klebstoff oder als Beschichtung.

12. Verwendung des Mehrkomponenten-Harzsystems gemäß irgendeinem der Ansprüche 1 bis 9 oder der Epoxidharzmasse gemäß Anspruch 10 zur chemischen Befestigung von Konstruktionselementen in Bohrlöchern oder Spalten.

13. Die Verwendung gemäß irgendeinem der Ansprüche 11 und 12, wobei die Verwendung bei einer Untergrundtemperatur von etwa -10°C bis etwa 180°C erfolgt.

14. Die Verwendung gemäß irgendeinem der Ansprüche 11 bis 13 auf einem nicht-basischen Untergrund, wobei der Untergrund bevorzugt nicht Beton ist.

15. Die Verwendung gemäß irgendeinem der Ansprüche 11 bis 13, wobei der Untergrund Stahl, Holz, Gestein oder Ziegel ist.

Europäisches
Patentamt

European
Patent Office

Office européen
des brevets

# EUROPÄISCHER RECHERCHENBERICHT

**Nummer der Anmeldung**

**EP 22 19 2538**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2017/247502 A1 (QIAN HUIFENG [US] ET AL) 31. August 2017 (2017-08-31) * Anspruch 53; Beispiele * ----- | 1-15 | INV. C08G59/62 C08G59/72 |
| A | US 4 321 351 A (ZUPPINGER PAUL ET AL) 23. März 1982 (1982-03-23) * Beispiele * * Ansprüche * ----- | 1-15 | |
| X | WO 2021/234012 A1 (RAPOLLO RESINS APS [DK]) 25. November 2021 (2021-11-25) * Ansprüche 1, 2,3 6 * * Seite 5, Zeilen 5-12 * ----- | 1,3-6, 11,13,14 | |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| Den Haag | 27. Januar 2023 | Schlicke, Benedikt |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 2538

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2023

| Im Recherchenbericht angeführtes Patentdokument | Datum der Veröffentlichung | Mitglied(er) der Patentfamilie | Datum der Veröffentlichung |
|---|---|---|---|
| US 2017247502 A1 | 31-08-2017 | CN 107041143 A | 11-08-2017 |
| | | EP 3221376 A1 | 27-09-2017 |
| | | JP 2018501335 A | 18-01-2018 |
| | | KR 20170085521 A | 24-07-2017 |
| | | US 2017247502 A1 | 31-08-2017 |
| | | WO 2016081550 A1 | 26-05-2016 |
| US 4321351 A | 23-03-1982 | CA 1146692 A | 17-05-1983 |
| | | EP 0028583 A2 | 13-05-1981 |
| | | JP S5676431 A | 24-06-1981 |
| | | JP S6332088 B2 | 28-06-1988 |
| | | US 4321351 A | 23-03-1982 |
| WO 2021234012 A1 | 25-11-2021 | CA 3152331 A1 | 25-11-2021 |
| | | EP 3913012 A1 | 24-11-2021 |
| | | EP 4045559 A1 | 24-08-2022 |
| | | IL 291805 A | 01-06-2022 |
| | | WO 2021234012 A1 | 25-11-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2826796 A1
- EP 3626756 A1
- EP 3000792 A1

**In der Beschreibung aufgeführte Nicht-Patentliteratur**

- *CHEMICAL ABSTRACTS,* 13374-44-2
- *CHEMICAL ABSTRACTS,* 96-08-2
- *CHEMICAL ABSTRACTS,* 1584677-14-4
- *CHEMICAL ABSTRACTS,* 4223-14-7
- *CHEMICAL ABSTRACTS,* 1393710-63-8
- *CHEMICAL ABSTRACTS,* 105839-17-6
- *CHEMICAL ABSTRACTS,* 1260636-34-7
- *CHEMICAL ABSTRACTS,* 63284-28-6
- *CHEMICAL ABSTRACTS,* 56-81-5
- *CHEMICAL ABSTRACTS,* 626-18-6
- *CHEMICAL ABSTRACTS,* 504-01-8
- *CHEMICAL ABSTRACTS,* 91-04-3
- *CHEMICAL ABSTRACTS,* 26896-48-0
- *CHEMICAL ABSTRACTS,* 504-63-2
- *CHEMICAL ABSTRACTS,* 111-29-5
- *CHEMICAL ABSTRACTS,* 207121-39-9
- *CHEMICAL ABSTRACTS,* 72259-10-0
- *CHEMICAL ABSTRACTS,* 38465-60-0